# EUROPÄISCHE PATENTSCHRIFT

(11) **EP 2 384 415 B1**
(45) Veröffentlichungstag und Bekanntmachung des Hinweises auf die Patenterteilung: **25.03.2015**
(21) Anmeldenummer: 10701556.2
(22) Anmeldetag: 01.02.2010
(51) Int. Cl.: F24J 2/07, F24J 2/48

(54) **SOLARABSORBERMODUL UND SOLARABSORBERANORDNUNG**
SOLAR ABSORBER MODULE AND SOLAR ABSORBER ARRANGEMENT
MODULE ABSORBEUR SOLAIRE ET AGENCEMENT D'ABSORBEURS SOLAIRES

(30) Priorität: 30.01.2009 DE 102009006952
(43) Veröffentlichungstag der Anmeldung: 09.11.2011
(73) Patentinhaber: Saint-Gobain IndustrieKeramik Rödental GmbH, 96472 Rödental (DE)
(72) Erfinder: HACK, Udo, 91336 Heroldsbach (DE)
(74) Vertreter: Lendvai, Tomas
(86) Internationale Anmeldenummer: PCT/EP2010/051181
(87) Internationale Veröffentlichungsnummer: WO 2010/086443

(56) Entgegenhaltungen:
- WO-A1-03/021161
- CH-A5- 669 837
- DE-A1- 19 744 541
- DE-B3- 10 239 700

## Beschreibung

Die Erfindung betrifft ein Solarabsorbermodul umfassend ein Gehäuse mit einer Längsachse mit einem ersten sich verjüngenden Gehäuseabschnitt mit einem ersten freien Ende und einem zweiten Ende mit gegenüber dem ersten Ende reduzierter Querschnittsfläche und mit einem sich an das zweite Ende des ersten Gehäuseabschnitts anschließenden zweiten Gehäuseabschnitt mit über seine Längserstreckung im Wesentlichen konstantem Querschnitt, und ein in dem ersten Ende des ersten Gehäuseabschnitts aufgenommenes keramisches Solarabsorberelement mit einer ersten zur Solarstrahlung hin ausrichtbaren Oberfläche mit einer Symmetrieachse und einer der ersten Oberfläche gegenüberliegenden zweiten Oberfläche, wobei das Solarabsorberelement eine Vielzahl im Wesentlichen geradlinig verlaufender, die erste Oberfläche mit der zweiten Oberfläche verbindender Kanäle aufweist. Ferner betrifft die Erfindung ein Verfahren zur Herstellung eines Solarabsorbermoduls sowie eine Solarabsorberanordnung.

Solarthermische Kraftwerke sind Kraftwerke, bei denen die über Absorber gewonnene Energie des Sonnenlichts als Wärme nutzbar gemacht wird. Eine besondere Form solarthermischer Kraftwerke sind sogenannte Solarturmkraftwerke, bei denen es sich zumeist um Dampfkraftwerke mit solarer Dampferzeugung handelt.

Aus DE 19707461 A1 ist ein Solarturmkraftwerk bekannt, dass eine auf einem Turm angeordnete, Solarabsorberanordnung - auch Solarreceiver genannt - aufweist, die ihrerseits eine Mehrzahl von Solarabsorbermodulen umfasst, die an einer gemeinsamen Tragkonstruktion gehalten werden. Die Solarabsorberanordnung wird von einer Vielzahl sich automatisch aufrichtender Spiegel (Heliostate) mit von den Spiegeln reflektierter Solarstrahlung bestrahlt, so dass sie - abhängig von der Anzahl der eingesetzten Spiegel - mit der 200- bis 1000fachen der normalen Strahlungsintensität beaufschlagt wird.

Im Betrieb des Solarturmkraftwerkes wird Umgebungsluft durch die einzelnen Absorberelemente der Solarabsorberanordnung in das Innere der Solarabsorbermodule gesaugt und auf eine Temperatur von ca. 700°C erwärmt. Die so erwärmte Luft strömt durch ein Leitungssystem in einen Wärmetauscher, wo sie ihre Wärme an einen Wasser-Dampfkreislauf zum Zwecke der Dampferzeugung abgibt. Der im Wärmetauscher produzierte Dampf treibt dann in bekannter Weise eine mit einem Generator verbundene Dampfturbine an. Die im Wärmetauscher auf ca. 150°C abgekühlte Luft strömt sodann zur Solarabsorberanordnung zurück und wird dort an die Umgebung wieder abgegeben, wobei sie durch die zwischen den einzelnen Solarabsorbermodulen gebildeten Zwischenräume strömt und dabei die durch den inneren Heißluftstrom stark erhitzten Anschlussrohre der Stahlkonstruktion der einzelnen Solarabsorbermodule kühlt. Als nachteilig erweist sich dabei die doppelwandige Konstruktion der metallischen Halterohre der Tragkonstruktion, bei der das innere Rohr, das das Absorbermodul aufnimmt, nur am hinteren Ende angeschweißt werden kann. In Folge der Temperaturwechselbelastung im Betrieb kann sich die Tragkonstruktion verziehen, wodurch sich die Spaltweite zwischen den Absorbermodulen nachteilig verändert.

Bei Solarturmkraftwerken der vorstehend beschriebenen Art hat es sich als problematisch erwiesen, dass zuviel des von den Heliostaten auf die Solarabsorberanordnung gestrahlten hochkonzentrierten Sonnenlichts nicht nutzbar ist, da es nicht auf die wirksame Absorberfläche, sondern beispielsweise in die Zwischenräume zwischen den Solarabsorbermodulen, aus denen die im Kraftwerk abgekühlte Luft austritt, oder auf das Gehäuse der Module fällt.

Aus DE 19744541 A1 ist ein Solarabsorbermodul bekannt, dass ein Gehäuse mit einer Längsachse und einem ersten sich verjüngenden Gehäuseabschnitt mit einem ersten freien Ende und einem zweiten Ende mit gegenüber dem ersten Ende reduzierter Querschnittsfläche aufweist und einen an das zweite Ende des ersten Gehäuseabschnitts anschließenden zweiten Gehäuseabschnitt aufweist, der einen über seine Längserstreckung im Wesentlichen konstanten Querschnitt hat. Das Solarmodul enthält ein in dem ersten Ende des ersten Gehäuseabschnitts aufgenommenes keramisches Solarabsorberelement, wobei das Solarabsorberelement derart in dem ersten Ende des ersten Gehäuseabschnitts aufgenommen ist, dass die Symmetrieachse der ersten Oberfläche in Linie mit der Längsachse des Gehäuses angeordnet ist.

Hiervon ausgehend liegt der Erfindung die Aufgabe zugrunde, ein verbessertes Solarabsorbermodul und eine verbesserte Solarabsorberanordnung bereitzustellen, welche sich durch eine optimierte Absorption der Solarstrahlung, verringerte Wärmeverluste und damit durch eine optimierte Effizienz bei der Energiewandlung in einem angeschlossenen Kraftwerk auszeichnet.

Die Aufgabe wird nach einer ersten Lehre der Erfindung mit einem Solarabsorbermodul nach dem Oberbegriff des Patentanspruches 1 dadurch gelöst, dass das Solarabsorberelement derart in dem ersten Ende des ersten Gehäuseabschnitts aufgenommen ist, dass die Symmetrieachse der ersten Oberfläche zur Längsachse des Gehäuses geneigt angeordnet ist.

Durch die geneigte Anordnung der Absorberelemente innerhalb des ersten Gehäuseabschnitts des Gehäuses ist es möglich, sämtliche Absorbermodule optimal auf die von den Heliostaten auf die aus den einzelnen Absorbermodulen gebildete Solarabsorberanordnung gerichtete Solarstrahlung auszurichten und gleichzeitig die Verluste zu minimieren. Dadurch, dass die einzelnen Absorberelemente jeweils - zum Heliostatenfeld hin - geneigt ausgerichtet sind, können sie in eine nunmehr im Wesentlichen vertikal ausgerichteten Solarabsorberanordnung eingebaut werden. Dies wiederum erlaubt aus konstruktiven Gründen größere Solarreceiver und damit leistungsfähigere Kraftwerke. Die Neigung der einzelnen Absorberkörper in den Gehäusen, deren jeweilige Längsachse dann im Wesentlichen horizontal ausgerichtet ist, bewirkt bei einem einzelnen Solarabsorbermodul für bestimmte steile Strahlungsauftreffwinkel receivernaher Heliostate eine geringfügige Abschattung des Bereichs oberhalb des zugehörigen Solarabsorberelements. Hierdurch verringern sich insbesondere die Verluste, die sich bei bekannten Solarabsorberanordnungen durch unvermeidbare Bestrahlung der Luftaustrittsspalten bzw. der Außenwand der Solarabsorbermodule ergeben. Untersuchungen der Anmelderin haben gezeigt, dass hierdurch ein Effizienzgewinn von ca. 4 - 5 % erreicht werden kann.

Eine besonders wirksame Effizienzsteigerung lässt sich mit einem Neigungswinkel von 5° - 20°, vorzugsweise 12,5° erreichen.

Das keramische Solarabsorberelement umfasst bevorzugt einen keramischen Monolithen mit einer Vielzahl diesen im Wesentlichen geradlinig durchsetzender Kanäle. Bei dem erfindungsgemäßen Solarabsorbermodul ist die erste Oberfläche des Solarabsorberelements im Wesentlichen eben ausgebildet, wobei die Symmetrieachse mit dem Normalenvektor der ersten Oberfläche zusammenfällt. Derartige ebene Geometrien sind vergleichsweise einfach herstellbar und damit kostengünstig verfügbar. Ferner erlaubt eine der Solarstrahlung zugewandte, ebene Oberfläche eine effiziente Einkopplung der Strahlung in das Solarabsorberelement und somit eine effiziente Umsetzung von Strahlungsenergie in Wärme. Insbesondere ist das Solarabsorberelement als Flachbauteil, insbesondere scheibenförmig oder quaderförmig, ausgebildet, wobei die Kanäle im Wesentlichen senkrecht zur flächigen Erstreckung verlaufen. Als Flachbauteil im Sinne der vorliegenden Erfindung ist ein Bauteil zu verstehen, dessen Länge und Breite wesentlich größer sind als seine Höhe. Für den als Flachbauteil ausgebildeten keramischen Monolithen bedeutet dies vorliegend, dass seine Länge und Breite, die wesentlich durch den Eingangsquerschnitt des freien Endes des ersten Gehäuseabschnitts vorgegeben sind, wesentlich größer sind als die Höhe des Monolithen, welche sich im eingebauten Zustand des Solarabsorberelements entsprechend geneigt zur Längsachse des Gehäuses erstreckt.

Das Gehäuse des Solarabsorbermoduls kann aus verschiedenen Werkstoffen gefertigt sein, wobei diese sich durch eine hohe Wärmebeständigkeit, Temperaturwechselbeständigkeit und vorzugsweise geringe Wärmeleitfähigkeit auszeichnen müssen. Da es sich bei dem Solarabsorberelement in der Regel um einen keramischen Körper handelt, ist das Gehäuse vor dem Hintergrund einer gleichmäßigen thermischen Ausdehnung zweckmäßigerweise ebenfalls aus einem keramischen Werkstoff, insbesondere aus siliziuminfiltriertem Siliciumcarbid (SiSiC) oder nitridgebundenem Siliziumcarbid (NSiC), hergestellt. Besonders bevorzugt ist die Verwendung von Cordierit.

Nach einer weiteren vorteilhaften Ausgestaltung der Erfindung weisen die die erste Oberfläche mit der zweiten Oberfläche des Solarabsorberelements verbindenden Kanäle einen polygonalen Querschnitt auf. Eine vergleichsweise einfache und kostengünstige Herstellung ist mit einfachen quadratischen Kanalquerschnitten möglich. Als besonders wirksam in Bezug auf eine effiziente Absorption der Solarstrahlung haben sich hexagonalen Querschnitte erwiesen. Wie Untersuchungen der Anmelderin gezeigt haben, ermöglichen sie gegenüber quadratischen Querschnitten eine Vergrößerung der Wärmeaustauschfläche von 15 % bei identischem hydraulischen Durchmesser und flächengleichem Öffnungsquerschnitt.

Nach einer weiteren Ausgestaltung der Erfindung ist die innere Wandung des zweiten Gehäuseabschnitts mit einer Isolierauskleidung versehen. Hierdurch wird der durch den zweiten Gehäuseabschnitt strömende und zuvor beim Durchströmen des Absorberkörpers stark erhitzte Fluidstrom von der Wand des zweiten Gehäuseabschnitts effektiv thermisch getrennt. Dies hat insbesondere den positiven Effekt, dass eine Wärmeübertragung vom Gehäuse an die in der Regel stählerne Tragkonstruktion einer Solarabsorberanordnung minimiert ist. Eine solche Wärmeübertragung führt oberhalb eines bestimmten Temperaturniveaus zu einer nicht mehr ausreichenden Stabilität der Tragkonstruktion einer Solarabsorberanordnung.

Vorteilhafterweise erstreckt sich die Isolierauskleidung sich bis in den ersten Gehäuseabschnitt, wobei sie an der Wand des ersten sich verjüngenden Gehäuseabschnitts anliegt. Hierdurch wird eine weiter verbesserte thermische Trennung zwischen Gehäuse des Solarabsorbermoduls und der Tragkonstruktion einer Solarabsorberanordnung erreicht, wobei der Fluidstrom praktisch nicht behindert wird.

Ebenso ist es möglich, auch die Außenwand des zweiten Gehäuseabschnitts mit einer Isolierung zu umhüllen. Es versteht sich, dass hierdurch eine weiter optimierte Isolation des heißen zweiten Gehäuseabschnitts gegenüber der Tragkonstruktion erzielt wird.

Um den zweiten Gehäuseabschnitt optimal von einem Rohrabschnitt, in den das Gehäuse des Solarabsorbermoduls mit seinem zweiten Gehäuseabschnitt eingesteckt ist, thermisch zu trennen, ist nach einer weiteren Ausgestaltung der Erfindung vorgesehen, dass der zweite Gehäuseabschnitt an seiner Außenwand wenigstens eine Abstandsnocke zur zentrischen Befestigung in einem Rohr einer Solarabsorberanordnung aufweist. Hierdurch ist ein gleichmäßiger Abstand der Außenwandung des zweiten Gehäuseabschnitts von der umgebenden Rohrinnenwand gewährleistet, so dass es zu keiner punktuellen Überhitzung von Teilen einer Tragkonstruktion infolge eines zu geringen Abstands bzw. sogar einer Berührung zwischen dem Gehäuseabschnitt und der Tragkonstruktion kommen kann.

Nach einer weiteren besonders vorteilhaften Ausgestaltung der Erfindung weist das Gehäuse im ersten sich verjüngenden Gehäuseabschnitt eine sich über den gesamten Innenquerschnitt des ersten Gehäuseabschnitts erstreckende, mit einer Mehrzahl von Öffnungen versehene Wand auf. Der besondere Vorteil dieser Augestaltung besteht darin, dass das durch das Solarabsorberelement in das Gehäuse eingesaugte Fluid - in der Regel Luft - bei entsprechender Verteilung und Dimensionierung der Öffnungen über die Fläche der Wand, was sich durch entsprechende Simulationsrechnungen einfach bestimmen lässt, über den gesamten Querschnitt des Solarabsorberelementes, d.h. also auch in seinen Randbereichen, gleichmäßig strömen kann, so dass lokale Temperaturspitzen im Absorbermodul sicher vermieden werden.

Bevorzugt vergrößert sich dabei der Querschnitt der Öffnungen und/oder die Dichte der Öffnungen pro Flächeneinheit der Wand vom Flächenmittelpunkt der Wand zu deren Rand. Hierdurch wird also eine Möglichkeit eröffnet, den relativen Strömungswiderstand zum Rand hin zu verringern, um wirksam zu verhindern, dass das durch das Solarabsorberelement strömende und sich dabei aufheizende Fluid (Luft) bevorzugt im mittleren Bereich des Solarabsorberelementes eingesaugt wird.

Eine weitere aus fertigungstechnischer Sicht vorteilhafte Ausgestaltung der Erfindung besteht darin, dass die Wand vom freien Ende des ersten Gehäuseabschnitts aus gesehen konkav gewölbt ist, um bei der Herstellung des insbesondere aus einem keramischen Werkstoff bestehenden Solarabsorbergehäuses das Entformen des Kerns des Vollgussteils zu erleichtern.

Durch Vorsehen einer Wand in dem sich verjüngenden ersten Gehäuseabschnitt lässt sich das Gehäuse des erfindungsgemäßen Solarabsorbermoduls fertigungstechnisch besonders günstig in einem kombinierten Hohlguss und Vollguss herstellen. Insbesondere hat dies den Vorteil, dass der im Vollguss hergestellte erste Gehäuseabschnitt von seinem freien Ende bis zur Wand ohne maschinelle Nacharbeit mit engen Toleranzen gefertigt werden kann, während die übrigen Gehäuseabschnitte konventionell im Hohlguss hergestellt werden. In einer weiteren Ausführung kann die Wand auch separat hergestellt werden, z.B. durch Wasserstrahlschneiden oder Fräsen von Plattenmaterial. Die Wand wird dann in das herkömmlich durch Hohlguss hergestellte Gehäuse eingarniert.

Ein wesentliches Kriterium bei der Auslegung des Solarabsorbermoduls ist es, ein über den gesamten Querschnitt des Solarabsorberelementes homogenes Strömungsprofil für das eingesaugte Fluid zu erreichen. Hierzu ist die Verteilung und/oder der Querschnitt der in der im ersten Gehäuseabschnitt des Gehäuses angeordneten Wand vorgesehenen Öffnungen derart bemessen, dass ein von außen in das monolithische Solarabsorberelement über dessen gesamten Querschnitt einströmender Fluidstrom bezüglich einzelner Flächeneinheiten auf dem Absorberelement gleichmäßig in den zweiten Gehäuseabschnitt geleitet wird.

Eine weitere Lehre der vorliegenden Erfindung betrifft ein Verfahren zur Herstellung eines Solarabsorbermoduls nach Anspruch 16, wobei die Herstellung des Gehäuses durch folgende Verfahrensschritte gekennzeichnet ist:
- Erzeugung des Gehäuses im kombinierten Hohlguss und Vollguss, wobei der Bereich zwischen dem ersten freien Ende des ersten Gehäuseabschnitts und der Wand im Vollguss erzeugt wird und der Bereich zwischen der Wand und dem freien Ende des zweiten Abschnitts im Hohlguss erzeugt wird,
- Einformen der Öffnungen in die ungebrannte Wand und
- anschließende Hochtemperaturbehandlung.

Das Verfahren ermöglicht die Herstellung von Gehäusen für Solarabsorbermodule mit besonders hoher Präzision und Oberflächenqualität im ersten Gehäuseabschnitt. Im Übrigen gilt zu den Vorteilen des Verfahrens das vorstehend Gesagte.

Insbesondere kann das Einformen der Öffnungen in die Wand in einfacher Weise durch im Stand der Technik übliches CNC-Fräsen bewerkstelligt werden.

Ein weiterer Aspekt der Erfindung betrifft eine Solarabsorberanordnung mit einer Tragkonstruktion für eine Mehrzahl von Solarabsorbermodulen nach einem der Ansprüche 1 bis 16.

Die Tragkonstruktion kann beispielsweise eine Anzahl von in die Tragkonstruktion eingelassenen doppelwandigen Rohrstutzen aufweisen, in die die jeweils zweiten Gehäuseabschnitte der Gehäuse der Solarabsorbermodule aufgenommen sind.

Alternativ kann die Tragkonstruktion eine Frontfläche mit einer Anordnung von ersten und die ersten Öffnungen umgebenden zweiten Öffnungen aufweisen, wobei in der Tragkonstruktion einwandige Halterohre zur Aufnahme der Gehäuse der Solarabsorbermodule vorgesehen sind, die zur Erhöhung der Stabilität beidseitig verschweißt werden können. Die Solarabsorbermodule sind in den ersten Öffnungen, die gleichzeitig die vorderen Enden der einwandigen Haltrohre darstellen, aufgenommen. Die zweiten Öffnungen sind für einen Austritt des rückströmenden abgekühlten Fluids ausgebildet. Die zweiten Öffnungen bilden dabei bevorzugt eine Verbindung zwischen hinter der Frontfläche und zwischen den zweiten Gehäuseabschnitten der einzelnen Solarabsorbermodule angeordneten Sammelkästen, in die der abgekühlte rückgeführte Fluidstrom einströmt, und der Umgebung, in die das Fluid - in der Regel Luft - aus den Sammelkästen ausströmt.

Bevorzugt sind die zweiten Öffnungen als vertikale und/oder horizontale Schlitze und/oder kreisförmige Öffnungen ausgebildet. Der Vorteil gegenüber den doppelwandigen Rohrsstutzen, durch deren jeweiligen Ringkanal das rückgeführte Fluid in die Umgebung strömen muss, ist ein größerer Öffnungsquerschnitt, welcher eine Verlangsamung des Fluidstroms ermöglicht. Eine derartige Verlangsamung wiederum ermöglicht, dass ein größerer Anteil des auströmenden Fluids durch die Absorberelemente wieder eingesaugt werden kann, wodurch sich die Energieverluste infolge nicht mehr nutzbarer Abwärme verringern lassen.

Im Folgenden wird die Erfindung anhand einer Ausführungsbeispiele darstellenden Zeichnung näher erläutert. Es zeigen:
- Fig. 1: ein Solarabsorbermodul nach dem Stand der Technik im Längsschnitt,
- Fig. 2: ein Gehäuse für ein Solarabsorbermodul in einer ersten Ausführungsform im Längsschnitt
- Fig. 3: eine Solarabsorberanordnung mit zwei übereinander angeordneten Solarabsorbermodulen mit jeweils einem Gehäuse gemäß Fig. 2 im Vertikalschnitt,
- Fig. 4: die Frontfläche der Solarabsorberanordnung nach Fig. 4,
- Fig. 5: eine gegenüber Fig. 3 modifizierte Solarabsorberanordnung gemäß Schnittlinie V-V in Fig. 6,
- Fig. 6: eine Solarabsorberanordnung mit einer Tragkonstruktion und einer Mehrzahl von Solarabsorbermodulen gemäß Fig. 5,
- Fig. 7: ein Gehäuse für ein Solarabsorbermodul gemäß einer dritten Ausführungsform im Längsschnitt,
- Fig. 8: das Gehäuse aus Fig. 7 in um 90° gedrehter Ansicht (Rückansicht),
- Fig. 9: das Gehäuse für ein Solarabsorbermodul aus Fig. 8 in Frontansicht,
- Fig. 10: ein Solarabsorbermodul mit dem Gehäuse aus Fig. 9 im eingebauten Zustand im Längsschnitt und
- Fig.11a,b: die Schritte eines Verfahrens zur Befestigung eines Gehäuses für ein Solarabsorbermodul in einer Tragkonstruktion

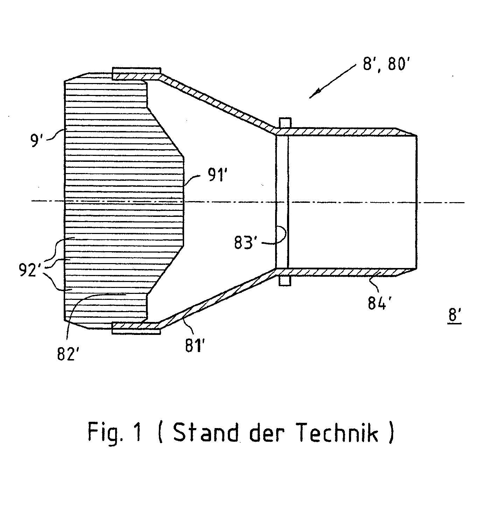

Wie in Fig. 1 dargestellt, umfasst ein aus dem Stand der Technik bekanntes Solarabsorbermodul 8' ein Gehäuse 80'mit einer Längsachse L, das seinerseits einen ersten sich verjüngenden Gehäuseabschnitt 81' mit einem ersten freien Ende 82' und einem zweiten Ende 83' mit gegenüber dem ersten Ende 82' reduzierten Querschnitt sowie einen zweiten Gehäuseabschnitt 84' mit über seine Längserstreckung im Wesentlichen konstantem Querschnitt umfasst. Wie ferner in Fig. 1 erkennbar, schließt sich der zweite Gehäuseabschnitt 84' unmittelbar an das zweite Ende 83' des ersten Gehäuseabschnittes 83' an, so dass das Gehäuse 80' insgesamt eine Trichterform aufweist.

In das freie Ende 82' des ersten Gehäuseabschnittes 81' ist ein Solarabsorberelement 9' aufgenommen, das vorliegend im Wesentlichen quaderförmig ausgebildet ist und an seiner ins Innere des Gehäuses 80' weisenden Oberfläche einen Pyramidenstumpf 91' aufweist.

Das aus einem keramischen Werkstoff, bevorzugt SiC oder siliziuminfiltriertem SiC, bestehende Solarabsorberelement 9' ist mit einer Vielzahl von nebeneinander und übereinander angeordneten Kanälen 92' ausgebildet, die die beiden Oberflächen des Solarabsorberelementes 9' miteinander verbinden und senkrecht zu den Oberflächen bzw. parallel zur Längsachse des Solarabsorbermoduls 8' ausgerichtet sind. Der im Inneren des Gehäuses 80' des Solarabsorbermoduls 8' angeordnete Pyramidenstumpf 91' dient der Verlängerung der mittig angeordneten Kanäle 92' des Solarabsorberelementes 9', um das mittig durch das Solarabsorberelement 9' strömende Fluid - vorliegend Luft - derart zu verzögern, dass sich über die gesamte Querschnittserstreckung des Solarabsorberelementes 9' ein gleichmäßiges Strömungsprofil ergibt, was Temperaturspitzen im Randbereich verhindert. Der Nachteil eines derart geformten Solarabsorberelementes 9' ist, dass keine wirklich gleichmäßige Strömungsverteilung erreicht wird sowie das hohe Gewicht, das verstärkte Stahlkonstruktionen erfordert. Ferner erweist sich die Oberflächenqualität der Innenfläche des Gehäuseabschnittes 81', welches herkömmlich aus im Hohlguss hergestelltem keramischen Material besteht, als unbefriedigend.

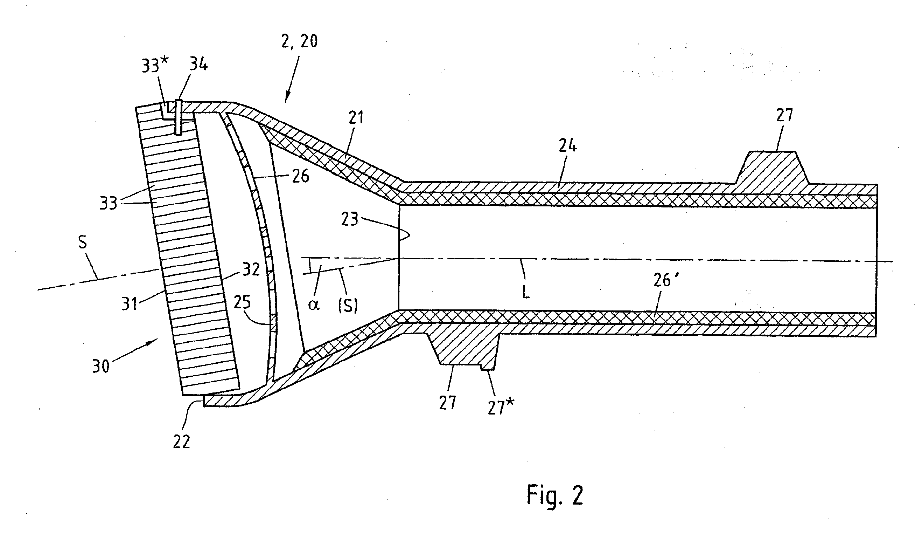

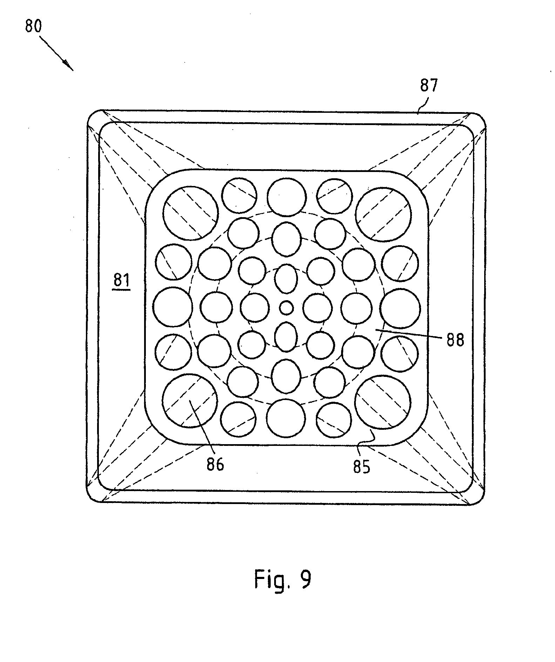

Der zweite Gehäuseabschnitt 84' des Gehäuses 80' des bekannten Solarabsorbermoduls 8' wird zur Montage des Solarabsorbermoduls 8' an einer Tragkonstruktion (nicht dargestellt) in das innere Rohr eines doppelwandigen Rohrstutzen als Teil der Tragkonstruktion eingesteckt (analog zu Fig. 2 und 9). Die durch das Solarabsorberelement 9' gesaugte und dabei stark erhitzte Luft strömt nun durch den Rohrstutzen in einen Sammler, von wo aus es in Richtung des Wärmetauschers eines solarthermischen Kraftwerks geleitet wird. Die rückgeleitete abgekühlte Luft strömt durch den Ringkanal zwischen innerem und äußerem Rohr des Rohrstutzens 10 und weiter an der Außenfläche des sich verjüngenden ersten Gehäuseabschnitts 81', wobei es das gesamte Gehäuse 80' kühlt.

In Fig. 2 ist ein gegenüber dem aus dem Stand der Technik bekannten Solarabsorbermodul 8' modifiziertes Solarabsorbermodul 2 im Längsschnitt dargestellt. Das Solarabsorbermodul 2 weist ein Gehäuse 20 mit einer Längsachse L auf, welches seinerseits einen ersten sich verjüngenden Gehäuseabschnitt 21 mit einem ersten freien Ende 22 und einem zweiten Ende 23 mit gegenüber dem ersten Ende 22 reduzierter Querschnittsfläche und einen sich an das zweite Ende 23 des ersten Gehäuseabschnitts 21 anschließenden zweiten Gehäuseabschnitt 24 mit über seine Längserstreckung im Wesentlichen konstantem Querschnitt aufweist. Der Querschnitt des ersten Gehäuseabschnitts 21 ist an seinem zweiten Ende 23 kreisrund, wobei der quadratische Querschnitt am ersten Ende 22 stetig in den kreisförmigen Querschnitt am zweiten Ende 23 übergeht.

In das freie Ende 22 des ersten Gehäuseabschnittes 21 des Gehäuses 20 ist wiederum ein Solarabsorberelement 30 aufgenommen. Da das Gehäuse 20 mit einer Wand 25 im Bereich des ersten Gehäuseabschnittes 21 versehen ist, wie unten noch näher erläutert wird, kann das Solarabsorberelement 30 als rein quaderförmiges Flachbauteil unter Verzicht auf den inneren Pyramidenstumpf ausgebildet sein und ist somit gegenüber dem Absorberelement der Fig. 1 wesentlich leichter.

Das Solarabsorberelement 30 seinerseits weist eine erste zur Solarstrahlung hin ausrichtbare Oberfläche 31 mit einer Symmetrieachse S und einer der ersten Oberfläche 31 gegenüberliegende zweite Oberfläche 32 auf, wobei das Solarabsorberelement 30 eine Vielzahl im Wesentlichen geradlinig verlaufender, die erste Oberfläche 31 mit der zweiten Oberfläche 32 verbindender Kanäle 33 umfasst.

Die Kanäle 33 weisen bevorzugt einen hexagonalen, d.h. wabenförmigen Querschnitt auf. Hierdurch ist gegenüber einfachen quadratischen Querschnitten ein Oberflächengewinn von ca. 15 % bei identischem hydraulischem Durchmesser und gleicher Eintrittsquerschnittsfläche erzielbar.

Wie in Fig. 2 erkennbar, ist das Solarabsorberelement 30 derart in dem ersten Ende 22 des ersten Gehäuseabschnitts 21 aufgenommen, dass die Symmetrieachse S der ersten Oberfläche 31 zur Längsachse L des Gehäuses 20 geneigt angeordnet ist. Da die erste Oberfläche 31 des Solarabsorbermoduls 30 im Wesentlichen eben ausgebildet ist, fällt hier die Flächennormale mit der Symmetrieachse zusammen. Die Symmetrieachse S schließt mit der Längsachse einen Winkel α von bevorzugt 5 - 20°, vorliegend 12,5° ein (vgl. die parallelverschobene Symmetrieachse (S) in Fig. 2).

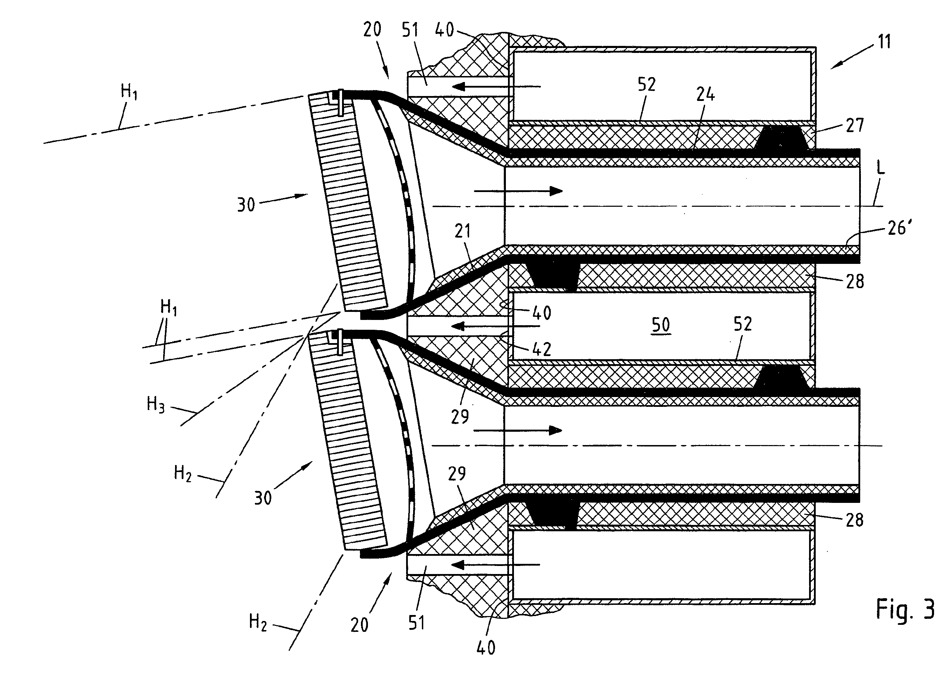

Durch die geneigte Anordnung der Absorberelemente innerhalb des ersten Gehäuseabschnitts 21 des Gehäuses 20 ist es möglich, sämtliche Solarabsorbermodule 2 optimal auf die von den Heliostaten auf die aus den einzelnen Solarabsorbermodulen 2 gebildete Solarabsorberanordnung gerichtete Solarstrahlung auszurichten und gleichzeitig die Verluste zu minimieren. Diese kommen bei aus dem Stand der Technik bekannten Solarabsorberanordnungen insbesondere durch die unvermeidbare Bestrahlung der Luftaustrittsspalten bzw. der Außenwand der Solarabsorbermodule zustande, wie im Zusammenhang mit Fig. 3 noch im Detail erläutert wird. Untersuchungen der Anmelderin haben gezeigt, dass durch die geneigte Anordnung der Solarabsorberelemente 30 in den jeweiligen Gehäusen 20 der Solarabsorbermodule 2 ein Effizienzgewinn von ca. 4 - 5 % erreicht werden kann.

Wie aus Fig. 2 ferner hervorgeht, sind die obersten beiden Kanäle 33 des Solarabsorberelementes 30 mit einem L-förmigen Kanal 33* verbunden, so dass die dort einströmende Luft in das Absorbergehäuse 20 eingeleitet werden kann und somit auch diese Kanäle für die Aufheizung des Luftstroms zur Verfügung stehen.

Zur Fixierung des Solarabsorberelementes 30 im freien Ende 22 des Gehäuses 20 sind durch in dem freien Ende 22 vorgesehene Öffnungen Sperrstifte 34 durchgesteckt.

Im zweiten Gehäuseabschnitt 24 des Gehäuses 20 ist ferner eine Hülse 26' aus Isoliermaterial zur Auskleidung der Innenwandung des zweiten Gehäuseabschnitts 24 vorgesehen, die den im Absorberelement 30 aufgeheizten Luftstrom von der Wandung thermisch trennt. Wie erkennbar, erstreckt sich die Isolierung bis in den ersten Gehäuseabschnitt 21, so dass eine weiter verbesserte Isolierung erreicht wird. Weiterhin weist der zweite Gehäuseabschnitt 24 an seiner Außenwand wenigstens drei Abstandsnocken 27 (lediglich zwei sind in der Längsschnittansicht erkennbar) zur zentrischen Befestigung in einem Rohr in der Tragkonstruktion einer Solarabsorberanordnung auf.

Im ersten Gehäuseabschnitt 21 ist eine sich an ihrer Längsposition über den gesamten Innenquerschnitt des ersten Gehäuseabschnittes 21 erstreckende, mit einer Mehrzahl von Öffnungen 26 versehene Wand 25 angeordnet. Wie insbesondere aus Fig. 9, die eine Gehäuse für ein Solarabsorbermodul mit in Bezug auf die Wand 25 vergleichbarer Geometrie zeigt, hervorgeht, vergrößert sich der Querschnitt der Öffnungen 26 in der Wand 25 vom Flächenmittelpunkt der Wand zu deren Rand. Ebenso ist es möglich, dass sich die Dichte der Öffnungen pro Flächeneinheit der Wand vom Flächenmittelpunkt der Wand zu deren Rand vergrößert. Im Ergebnis führt dies dazu, dass der Strömungswiderstand vom Mittelpunkt der Fläche 25 zu deren Rand verringert wird. Hierdurch wird wirksam verhindert, dass die durch das Solarabsorberelement strömende Luft im mittleren Bereich mit deutlich höherer Strömungsgeschwindigkeit strömt, was zur Folge hätte, dass es in den Randbereichen zu einem Temperaturstau kommt. Es wird also ein über den gesamten Querschnitt des Solarabsorberelementes 30 gleichmäßiges Strömungsprofil erzielt, ohne das hierzu eine Volumenvergrößerung des Solarabsorberelements 30 nötig ist. Wie aus Fig. 2 ferner hervorgeht, kann die Wand 25 zudem bezogen auf das freie Ende 22 des ersten Gehäuseabschnitts 21 konkav gewölbt ausgebildet sein mit entsprechend erleichterter Entformung bei der Herstellung.

Besteht das Gehäuse 20 aus einem keramischen Werkstoff, was in der überwiegenden Zahl der Anwendungsfälle infolge der hohen Temperaturbeständigkeit keramischer Werkstoffe, wie z.B. SiC, der Fall sein wird, so können die Öffnungen 26 nach Herstellung des Gehäuses 20 beispielsweise im kombinierten Hohl- und Vollguss durch CNC-Fräsen in die Wand 25 eingebracht werden.

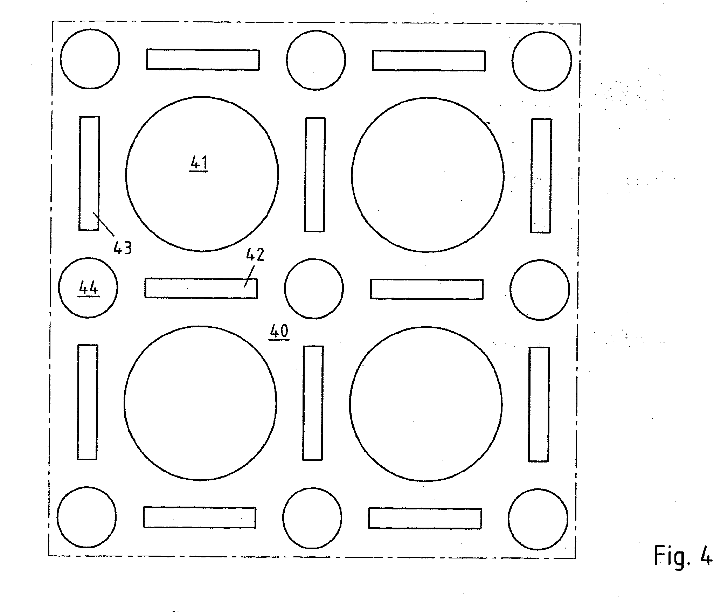

In Fig. 3 ist eine Solarabsorberanordnung mit zwei übereinander angeordneten Solarabsorbermodulen 2 mit jeweils einem Gehäuse 20 gemäß Fig. 2 im Vertikalschnitt dargestellt. Die Solarabsorberanordnung umfasst eine Tragkonstruktion 11 aus Stahl, die hier nur ausschnittsweise dargestellt ist. Die Tragkonstruktion 11 umschließt einen Luftsammelbereich 50, der der Rückführung der im solarthermischen Kraftwerk abgekühlten Luft, die ihrerseits die Tragkonstruktion 11 kühlt, dient. Der Luftsammelbereich 50 wird von einer Anzahl einwandiger Halterohre 52 durchsetzt, in welchen die Gehäuse 20 der Solarabsorbermodule 2 aufgenommen sind. Die Halterohre 52 sind an ihren beiden Enden mit der Tragkonstruktion 11 verschweißt, wodurch insgesamt die konstruktive Gestaltung der Tragkonstruktion 11 vereinfacht und gleichzeitig die Stabilität deutlich erhöht wird mit der Folge, dass die Breite der Luftausströmspalten zwischen den Absorbermodulen bei Temperaturwechselbelastung stabil bleibt. Ferner umfasst die Tragkonstruktion 11 eine einheitliche Frontfläche 40, die mit einer Mehrzahl von Öffnungen versehen ist (vgl. Fig. 4), über die die rückgeführte Luft aus der Solarabsorberanordnung in die Umgebung austreten kann.

Bekanntlich wird bei aus dem Stand der Technik bekannten Solarreceivern die Stabilität der Stahl-Tragkonstruktion 11 durch die hohen Temperaturen des Luftstroms, die sich bei der Tragkonstruktion 11 durch Wärmeleitung auf das Gehäuse der Solarabsorbermodule und von dort auf die Tragkonstruktion 11 einstellen, beeinträchtigt. Um weiter eine optimale thermische Trennung zwischen dem heißen Luftstrom und der Tragkonstruktion 11 der Solarabsorberanordnung (Solarreceiver) zu erreichen, wird daher eine bestmögliche Isolierung der einzelnen Solarabsorbermodule 2 in der Tragkonstruktion 11 angestrebt. Dies wird vorliegend einerseits durch die bereits beschriebene isolierende Innenauskleidung 26 des zweiten Gehäuseabschnitts 24 erreicht. Zusätzlich ist bei der Solarabsorberanordnung der Fig. 3 noch eine die Außenwand des zweiten Gehäuseabschnitts 24 umhüllende Außenisolierung 28 vorgesehen. Um eine zentrische Ausrichtung des zweiten Gehäuseabschnitts 24 innerhalb des jeweiligen Halterohrs 52 sicherzustellen, sind, wie bereits erwähnt, an der Außenwandung des zweiten Gehäuseabschnitts 24 insgesamt drei Abstandsnocken 27 vorgesehen, von denen die unteren beiden (nur eine sichtbar) jeweils noch eine Vorsprung 27* aufweisen, mit welchem sie zur korrekten und sicheren Längspositionierung in eine korrespondierende Öffnung im Halterohr 52 einrasten können.

Schließlich sind in der Solarabsorberanordnung der Fig. 3 noch weitere Isolierkörper 29 vorgesehen, durch welche auch die Außenwand des jeweils ersten Gehäuseabschnitts 21 der Gehäuse 20 der Solarabsorbermodule 2 isoliert wird. Hierbei handelt es sich um speziell gehärtetes Isoliermaterial. Zwischen jeweils benachbart angeordneten Isolierkörpern 29 wird jeweils ein Kanal 51 in Verlängerung der Öffnungen des Luftsammelbereichs 50 freigegeben, durch welchen die abgekühlte Luft in die Umgebung strömt und teilweise wieder zur erneuten Erhitzung im Solarabsorberkörper 30 in die Solarabsorbermodule 2 eingesaugt wird.

Wie oben erwähnt sind die Absorberkörper 30 relativ zu den Längsachsen L der Absorbergehäuse 20 geneigt ausgerichtet. Die Neigung orientiert sich dabei an der Ausrichtung der Heliostaten im Heliostatenfeld, welches die Solarabsorberanordnung beleuchtet. Bei einem Solarturmkraftwerk, in welches die vorliegende Solarabsorberanordnung eingebaut ist, werfen die am weitesten entfernt stehenden Heliostaten ihr Licht in einem flachen Winkel von ca. 10° auf die Absorberkörper 30, wie durch die strichpunktierten Linien H₁ angedeutet. Dagegen wird das Licht von den am nächsten stehenden Heliostaten unter einem deutlich größeren Winkel (ca. 60°) auf die Absorberkörper 30 geworfen, wie durch die Linien H₂ angedeutet. Hierbei wird durch die vorspringende Oberkante eines jeden Absorberkörpers 30 der Spalt zwischen den jeweils übereinander benachbart angeordneten Solarabsorbermodulen 2 abgeschattet, so dass das besonders intensive Licht der turmnahen Heliostaten vollständig auf die Absorberkörper 30 geworfen wird und somit uneingeschränkt für die Erhitzung des Luftstroms und damit für die Energiegewinnung zur Verfügung steht. Die Linie H₃ beschreibt einen Einfallswinkel von ca. 35°, unter welchem das Licht exakt so auf die Absorberkörper 30 eingestrahlt wird, dass zwar der nicht nutzbare Spaltbereich ausgespart bleibt, jedoch jeder Solarabsorberkörper 30 vollständig beschienen wird. Diese Lichteinfallsrichtung wird bei Heliostaten in mittlerer Entfernung von der Solarabsorberanordnung erreicht.

Fig. 4 zeigt die Frontfläche 40 der Solarabsorberanordnung. Diese weist schachbrettartig angeordnete große kreisförmige Öffnungen 41 der Haltrohre 52 auf, in welchen die zweiten Gehäuseabschnitte 24 der Solarabsorbermodule 2 aufgenommen werden. Ferner umfasst die Frontfläche 40 horizontale Schlitze 42 sowie vertikale Schlitze 43, welche die Öffnungen 41 umgeben. Schließlich umfasst die Frontfläche 40 noch kleinere runde Öffnungen 44. Da mit den Öffnungen 42, 43, 44 in der Summe ein vergleichsweise großer Ausströmquerschnitt zur Verfügung steht, kann die rückgeführte abgekühlte Luft mit vergleichsweise geringer Strömungsgeschwindigkeit entweichen, so dass ein großer Teil (ca. 80 %) der ausströmenden Luft, deren Temperaturniveau noch deutlich über dem der Umgebungsluft liegt, wieder eingesaugt werden kann. Darüber hinaus kann insgesamt der Anteil der rückgeführten Luft verringert werden, da der Kühlungsbedarf der Tragkonstruktion 11 infolge der optimierten Isolation verringert ist, wodurch die Strömungsgeschwindigkeit weiter herabgesenkt und ein größerer Anteil der rückgeführten Luft wieder genutzt werden kann.

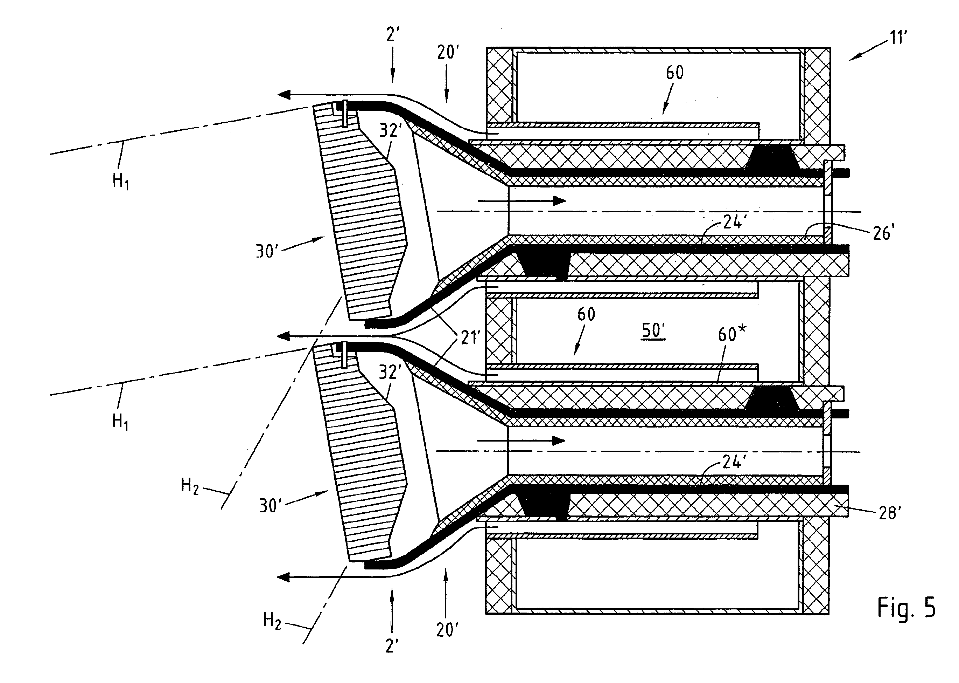

Fig. 5 zeigt eine gegenüber Fig. 3 modifizierte Solarabsorberanordnung. Hierbei sind die Solarabsorbermodule 2' gegenüber den Solarabsorbermodulen 2 der Fig. 3 dahingehend geändert, dass der Querschnitt der jeweils zweiten Gehäuseabschnitte 24' etwas reduziert ist. Dies hängt mit der geänderten Aufnahme der Solarabsorbermodule 2' mit doppelwandigen Halterohren 60 in der Tragkonstruktion 11' der Solarabsorberanordnung zusammen. Ferner weist das Gehäuse 20' des Solarabsorbermoduls 2' der Fig. 5 jeweils eine Innenisolierung und eine Außenisolierung auf, wodurch eine effektive thermische Trennung zwischen Gehäuse 20'und Tragkonstruktion 11' gewährleistet ist.

Die Tragkonstruktion 11' der Solarabsorberanordnung der Fig. 5 umschließt wiederum einen Luftsammelbereich 50' sowie, wie erwähnt, doppelwandige Rohrstutzen 60, die ihrerseits die zweiten Gehäuseabschnitte 24' aufnehmen. Durch den in dem doppelwandigen Rohrstutzen 60 gebildeten Ringspalt kann die rückgeführte abgekühlte Luft im Betrieb entweichen, wie durch entsprechende Pfeile in Fig. 5 gezeigt, und kühlt dabei gleichzeitig die Tragkonstruktion 11'. Aufgrund der geringeren Querschnittsfläche der Ringspalten sind hier jedoch höhere Strömungsgeschwindigkeiten erforderlich als bei der Solarabsorberanordnung der Fig. 3, so dass hier der Anteil der Luft, die in das Solarabsorbermodul 2' wieder eingesaugt werden kann entsprechend geringer ist. Allerdings kann durch die effektive Isolierung des Gehäuses 20' der Solarabsorbermodule 2' gegenüber dem inneren Halterohr 60* des entsprechenden doppelwandigen Haltrohrs 60 der Tragkonstruktion 11' insgesamt die zur Kühlung erforderliche Luftmenge und damit die Strömungsgeschwindigkeit reduziert werden.

Wie ferner aus Fig. 5 hervorgeht, ist in den ersten Gehäuseabschnitten 21' der Gehäuse 20' der Solarabsorbermodule 2' keine Wand mit einem Öffnungsmuster vorgesehen, so dass die Vergleichmäßigung der Luftströmung durch das Gehäuse 20' durch eine entsprechende Ausformung der Solarabsorberelemente 30' mit Pyramidenstumpf 32' bewerkstelligt werden muss.

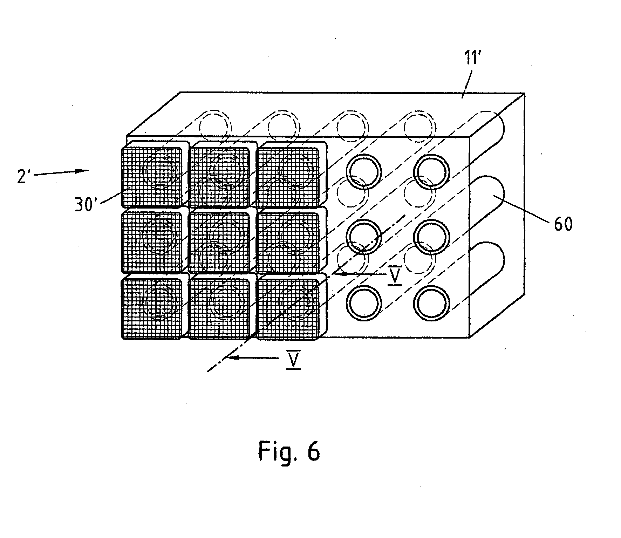

Fig. 6 zeigt eine Solarabsorberanordnung mit einer Tragkonstruktion 11' mit doppelwandigen Halterohren 60 mit einer großen Zahl (beispielsweise 3 x 9) Solarabsorbermodule 2', die matrixartig übereinander und nebeneinander angeordnet sind.

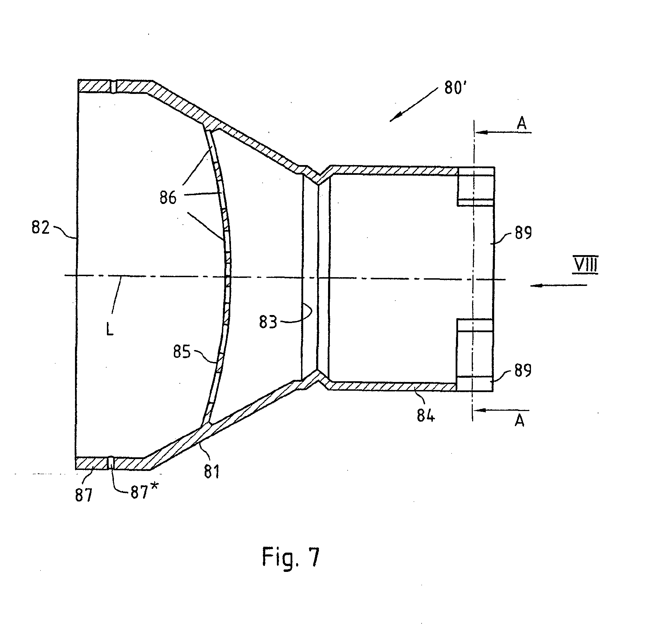

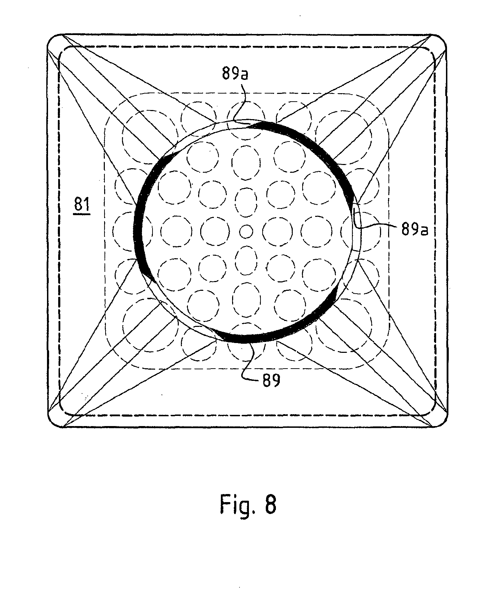

In Fig. 7 ist ein weiteres Gehäuse 80 für ein Solarabsorbermodul dargestellt. Es umfasst wiederum einen ersten sich verjüngenden Gehäuseabschnitt 81, mit einem ersten freien Ende 82 mit quadratischem Querschnitt (vgl. Fig. 8 und 9) zur Aufnahme eines Solarabsorberelementes (nicht dargestellt) und einem zweiten Ende 83 mit gegenüber dem ersten Ende reduzierter Querschnittsfläche. Das Solarabsorberelement kann in Fig. 1 dargestellten Weise, d.h. mit seiner der Symmetrieachse S entsprechenden Flächennormalen kolinear zur Längsachse L des Gehäuses 80 oder aber geneigt zur Längsachse L in das freie Ende 82 des ersten Gehäuseabschnitts 81 eingesetzt werden.

Der Querschnitt des ersten Gehäuseabschnitts 81 an seinem zweiten Ende 83 ist kreisrund, wobei der quadratische Querschnitt am ersten Ende 82 im Wesentlichen stetig in den kreisförmigen Querschnitt am zweiten Ende 83 übergeht. An seinem ersten freien Ende 82 weist der erste Gehäuseabschnitt 81 vorliegend noch einen Randabschnitt 87 mit konstantem Durchmesser auf. Ferner umfasst das Gehäuse 80 einen zweiten Gehäuseabschnitt 84 mit über seine Längserstreckung im Wesentlichen konstantem Querschnitt. Wiederum schließt sich der zweite Gehäuseabschnitt 84 an das zweite Ende 83 des ersten Gehäuseabschnittes 81 an.

Ferner ist im ersten Gehäuseabschnitt 81 eine an ihrer Längsposition sich über den gesamten Innenquerschnitt des ersten Gehäuseabschnittes 81 erstreckende, mit einer Mehrzahl von Öffnungen 86 versehene Wand 85 angeordnet. Wie insbesondere aus Fig. 9 hervorgeht, vergrößert sich der Querschnitt der Öffnungen 86 in der Wand 85 vom Flächenmittelpunkt der Wand zu deren Rand. Ebenso ist es möglich, dass sich die Dichte der Öffnungen pro Flächeneinheit der Wand vom Flächenmittelpunkt der Wand zu deren Rand vergrößert. Im Ergebnis führt dies dazu, dass der Strömungswiderstand vom Mittelpunkt der Fläche 85 zu deren Rand verringert wird. Hierdurch wird wirksam verhindert, dass die durch das Solarabsorberelement 9 strömende Luft im mittleren Bereich mit deutlich höherer Strömungsgeschwindigkeit strömt, so dass es in den Randbereichen zu einem Temperaturstau kommt. Es wird also ein über den gesamten Querschnitt des Solarabsorberelementes gleichmäßiges Strömungsprofil erzielt, ohne das hierzu eine Volumenvergrößerung des Solarabsorberelements nötig ist. Wie aus Fig. 2 ferner hervorgeht, kann die Wand 85 zudem bezogen auf das freie Ende 82 des ersten Gehäuseabschnitts 81 konkav gewölbt ausgebildet sein mit entsprechend erleichterter Entformung bei der Herstellung.

Besteht das Gehäuse 80 aus einem keramischen Werkstoff, was in der überwiegenden Zahl der Anwendungsfälle infolge der hohen Temperaturbeständigkeit keramischer Werkstoffe, wie z.B. SiC, der Fall sein wird, so können die Öffnungen 86 nach Herstellung des Gehäuses 80 beispielsweise im kombinierten Hohl- und Vollguss durch CNC-Fräsen in die Wand 85 eingebracht werden.

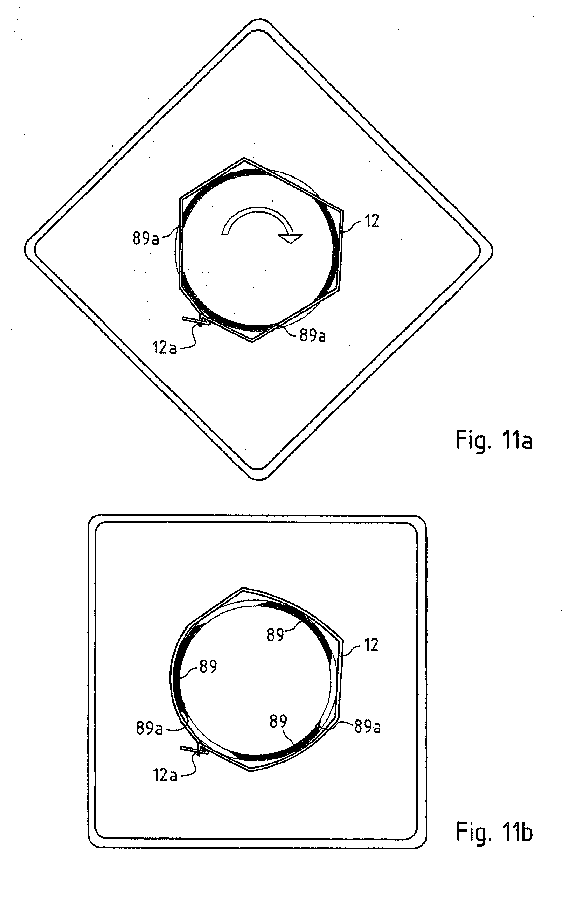

In Fig. 8 ist das Gehäuse 80 aus Fig. 2 in um 90° gedrehter Ansicht und damit in Rückansicht dargestellt. Erkennbar sind Vorsprünge 89 mit ihren beidseitigen Anschrägungen 89a, die das Spreizen einer Sicherungsklammer erleichtern, wie im Zusammenhang mit Fig. 11 noch näher erläutert wird.

Fig. 9 zeigt eine Frontalansicht der im ersten Gehäuseabschnitt 81 des Gehäuses 80 angeordneten Wand 85. Wie in Fig. 9 deutlich erkennbar ist, vergrößert sich der Querschnitt der Öffnungen 86 vom Flächenmittelpunkt der Wand zu deren Rand. Das konkret gewählte Öffnungsmuster, das der Vergleichmäßigung des Strömungsprofils über den gesamten Querschnitt des Absorberelementes dient, kann beispielsweise mittels Simulationsrechnungen bestimmt werden.

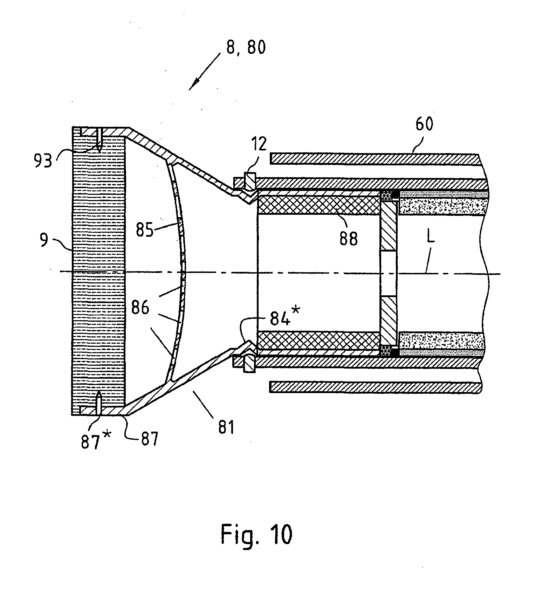

Fig. 10 zeigt das Solarabsorbermodul 8 im in die Tragkonstruktion 11' eines Solarreceivers eines Solarturmkraftwerks eingebauten Zustand, wobei von der Tragkonstruktion 11' lediglich der doppelwandige Rohrstutzen 60 dargestellt ist, der nur am hintere Ende verschweißt ist (nicht dargestellt). In das freie Ende 82 des ersten Gehäuseabschnittes 81 des Gehäuses 80 ist wiederum ein Solarabsorberelement 9 aufgenommen. Vorliegend ist das Solarabsorberelement 9 mit seinem Normalenvektor (entspricht der Symmetrieachse) kolinear zur Längsachse des Gehäuses 80 ausgerichtet. Da das Gehäuse 80 mit einer Wand 85 im Bereich des ersten Gehäuseabschnittes 81 versehen ist, kann das Solarabsorberelement rein quaderförmig unter Verzicht auf den inneren Pyramidenstumpf ausgebildet sein und ist somit wesentlich leichter.

Zur Fixierung des Solarabsorberelementes 9 an dem Randabschnitt mit konstanter Querschnittsfläche 87 sind durch in dem Randabschnitt 87 vorgesehene Öffnungen 87* Sperrstifte 93 durchgesteckt. Das Gehäuse 80 des Solarabsorbermoduls 8 seinerseits ist in dem inneren Rohrstutzen 10 mittels einer Sicherungsklammer 12 gesichert, die in eine umlaufende Nut 84* eingreift, die im Bereich des mit dem ersten Gehäuseabschnitt 81 verbundenen Endes des zweiten Gehäuseabschnittes 84 vorgesehen ist. Die Montage des Gehäuses 80 wird im Zusammenhang mit Fig. 11a, b näher erläutert.

In dem zweiten Gehäuseabschnitt 84 des Gehäuses 80 ist ferner noch eine Hülse 88 aus Isoliermaterial vorgesehen, die den im Absorberelement 9 aufgeheizten Luftstrom von dem aus Stahl bestehenden doppelwandigen Rohrstutzen 10 thermisch trennt.

In den Figuren 11a und 11b ist nun in stark schematisierter Ansicht ein Verfahren zum Befestigen des Gehäuses 80 an einem Rohrstutzen 10 der Tragkonstruktion 11 dargestellt. Hierbei wird das Gehäuse 80 an dem Rohrstutzen 10 wiederum durch eine vorliegend mehreckig ausgeführte umlaufende und mittels eines Schlosses 12a geschlossene Sicherungsklammer 12 fixiert. Wie in Fig. 7 und 8 erkennbar, weist der zweite Gehäuseabschnitt 84 des Gehäuses 80 an seinem freien Ende in Verlängerung des Gehäuseabschnitts 84 eine Mehrzahl in Umfangsrichtung zueinander beabstandeter Vorsprünge 89 auf. Zum Einführen des zweiten Gehäuseabschnittes 84 in den Rohrstutzen 60 und gleichzeitigem Spreizen der Sicherungsklammer 12 ohne übermäßigen Kraftaufwand wird das Gehäuse 80 in axial verdrehtem Zustand (beispielsweise um 60° verdreht) in die Sicherungsklammer 12 in der Weise eingeführt, dass die Vorsprünge 89 im Bereich der durch die Sicherungsklammer 12 definierten Öffnung durch die Sicherungsklammer 12 hindurchgeführt werden, ohne diese zu spreizen, was entsprechend ohne Kraftaufwand möglich ist. Dabei ist selbstverständlich entscheidend, dass der zweite Gehäuseabschnitt 84 ausschließlich mit den Vorsprüngen 89 durch die Sicherungsklammer 12 hindurchgeführt wird.

Anschließend wird das Gehäuse 80 in seine rotative Endposition verdreht - beispielsweise um 60° - wobei die Vorsprünge 89 nun mit den einzelnen Abschnitten der Sicherungsklammer 12 zur Anlage kommen und diese mit fortgesetzter Drehung des Gehäuses 80 spreizen, was einen im Vergleich zu einer translatorischen Spreizung geringen Kraftaufwand erfordert. Dies wird zusätzlich dadurch erleichtert, dass die Vorsprünge 89 an ihren beiden Kanten in Umfangsrichtung jeweils eine Anschrägung 89a aufweisen, so dass das Spreizen der Sicherungsklammer 12 stetig und nicht ruckartig ablaufen kann.

Ist die Sicherungsklammer 12 gespreizt, so kann das Gehäuse 80 wiederum mit nur geringem Kraftaufwand translatorisch in seine Endposition verschoben werden, wobei die Sicherungsklammer 12 in eine im zweiten Gehäuseabschnitt 84 vorgesehene Nut 84* einrastet. Hierdurch ist das Gehäuse 80 in seiner Betriebsposition gesichert.

## Patentansprüche

1. Solarabsorbermodul (2, 2') umfassend:
ein Gehäuse (20) mit einer Längsachse (L)
- mit einem ersten sich verjüngenden Gehäuseabschnitt (21, 21') mit einem ersten freien Ende (22) und einem zweiten Ende (23) mit gegenüber dem ersten Ende (22) reduzierter Querschnittsfläche und
- mit einem sich an das zweite Ende (23) des ersten Gehäuseabschnitts (21, 21') anschließenden zweiten Gehäuseabschnitt (24, 24') mit über seine Längserstreckung im Wesentlichen konstantem Querschnitt,
und ein in dem ersten Ende (22) des ersten Gehäuseabschnitts (21, 21') aufgenommenes keramisches Solarabsorberelement (30, 30')
- mit einer ersten zur Solarstrahlung hin ausrichtbaren Oberfläche (31) mit einer Symmetrieachse (S) und einer der ersten Oberfläche (31) gegenüberliegenden zweiten Oberfläche (32, 32'),
- wobei das Solarabsorberelement (30, 30') eine Vielzahl im Wesentlichen geradlinig verlaufender, die erste Oberfläche (31) mit der zweiten Oberfläche (32, 32') verbindender Kanäle (33) aufweist, wobei die erste Oberfläche (31) des Solarabsorberelements (30, 30') im Wesentlichen eben ausgebildet ist, wobei die Symmetrieachse mit dem Normalenvektor der ersten Oberfläche (31) zusammenfällt,
**dadurch gekennzeichnet, dass**
das Solarabsorberelement (30, 30') derart in dem ersten Ende (22) des ersten Gehäuseabschnitts (21, 21') aufgenommen ist, dass die Symmetrieachse der ersten Oberfläche (31) zur Längsachse (L) des Gehäuses geneigt angeordnet ist.

2. Solarabsorbermodul (2, 2') nach Anspruch 1,
**dadurch gekennzeichnet, dass**
der Neigungswinkel 5° - 20°, vorzugsweise 12,5° beträgt.

3. Solarabsorbermodul (2, 2') nach einem der Ansprüche 1 bis 2,
**dadurch gekennzeichnet, dass**
das Solarabsorberelement (30, 30') als Flachbauteil, insbesondere scheibenförmig oder quaderförmig, ausgebildet ist, wobei die Kanäle (33) im Wesentlichen senkrecht zur flächigen Erstreckung verlaufen.

4. Solarabsorbermodul (2, 2') nach einem der Ansprüche 1 bis 3,
**dadurch gekennzeichnet, dass**
das Gehäuse (20,20') aus einem keramischen Werkstoff hergestellt ist.

5. Solarabsorbermodul (2, 2') nach Anspruch 4,
**dadurch gekennzeichnet, dass**
das Gehäuse (20, 20') aus siliziuminfiltriertem Siliciumcarbid (SiSiC) oder nitridgebundenem Siliciumcarbid (NSiC) oder Cordierit hergestellt ist.

6. Solarabsorbermodul (2, 2') nach einem der Ansprüche 1 bis 5,
**dadurch gekennzeichnet, dass**
die Kanäle (33) einen polygonalen Querschnitt aufweisen.

7. Solarabsorbermodul (2, 2') nach Aspruch 6,
**dadurch gekennzeichnet, dass**
die Kanäle (33) einen hexagonalen Querschnitt aufweisen.

8. Solarabsorbermodul (2, 2') nach einem der Ansprüche 1 bis 7,
**dadurch gekennzeichnet, dass**
die innere Wandung des zweiten Gehäuseabschnitts (24, 24') mit einer Isolierauskleidung (26') versehen ist.

9. Solarabsorbermodul (2, 2') nach Anspruch 8,
**dadurch gekennzeichnet, dass**
die Isolierauskleidung (26') sich bis in den ersten Gehäuseabschnitt (21) erstreckt, wobei sie an der Wand des ersten sich verjüngenden Gehäuseabschnitts (21) anliegt.

10. Solarabsorbermodul (2, 2') nach einem der Ansprüche 1 bis 9,
**dadurch gekennzeichnet, dass**
die Außenwand des zweiten Gehäuseabschnitts (24, 24') mit einer Isolierung (28) umhüllt ist.

11. Solarabsorbermodul (2, 2') nach einem der Ansprüche 1 bis 10,
**dadurch gekennzeichnet, dass**
der zweite Gehäuseabschnitt (24) an seiner Außenwand wenigstens eine Abstandsnocke (27) zur zentrischen Befestigung in einem Rohr einer Solarabsorberanordnung aufweist.

12. Solarabsorbermodul (2) nach einem der Ansprüche 1 bis 11,
**dadurch gekennzeichnet, dass**
das Gehäuse im ersten sich verjüngenden Gehäuseabschnitt (21) eine sich über den gesamten Innenquerschnitt des ersten Gehäuseabschnitts (21) erstreckende, mit einer Mehrzahl von Öffnungen (26) versehene Wand (25) aufweist.

13. Solarabsorbermodul (2) nach Anspruch 12,
**dadurch gekennzeichnet, dass**
sich der Querschnitt der Öffnungen (26) und/oder die Dichte der Öffnungen (26) pro Flächeneinheit der Wand (25) vom Flächenmittelpunkt der Wand (25) zu deren Rand vergrößert.

14. Solarabsorbermodul (2) nach Anspruch 12 oder 13,
**dadurch gekennzeichnet, dass**
die Wand (25) vom freien Ende (22) des ersten Gehäuseabschnitts (21) aus gesehen konkav gewölbt ausgebildet ist.

15. Sotarabsorbermodul (2) nach einem der Ansprüche 12 bis 14,
**dadurch gekennzeichnet, dass**
die Verteilung und/oder der Querschnitt der in der im ersten Gehäuseabschnitt (21) angeordneten Wand (25) vorgesehenen Öffnungen (26) derart bemessen ist, dass ein von außen in das Solarabsorberelement (30) über dessen im Wesentlichen gesamten Querschnitt einströmender Fluidstrom bezüglich einzelner Flächeneinheiten auf dem Absorberelement (30) gleichmäßig in den zweiten Gehäuseabschnitt (24) geleitet wird.

16. Solarabsorbermodul (2) nach einem der Ansprüche 12 bis 15,
**dadurch gekennzeichnet, dass**
das Gehäuse (20) im kombiniertem Hohlguss und Vollguss hergestellt ist.

17. Verfahren zur Herstellung eines Solarabsorbermoduls (2) nach Anspruch 16, wobei die Herstellung des Gehäuses (20) durch folgende Verfahrensschritte gekennzeichnet ist:
- Erzeugung des Gehäuses (20) im kombinierten Hohlguss und Vollguss, wobei der Bereich zwischen dem ersten freien Ende (22) des ersten Gehäuseabschnitts (21) und der Wand (25) im Vollguss erzeugt wird und der Bereich zwischen der Wand (25) und dem freien Ende des zweiten Abschnitts (24) im Hohlguss erzeugt wird,
- Einformen der Öffnungen (26) in die ungebrannte Wand (25) und
- anschließende Hochtemperaturbehandlung.

18. Solarabsorberanordnung mit einer Tragkonstruktion (11, 11') für eine Mehrzahl von Solarabsorbermodulen (2, 2') nach einem der Ansprüche 1 bis 16.

19. Solarabsorberanordnung nach Anspruch 18,
**dadurch gekennzeichnet, dass**
die Tragkonstruktion (11') eine Anzahl von in die Tragkonstruktion eingelassenen doppelwandigen Rohrstutzen (60) aufweist, in die die jeweils zweiten Gehäuseabschnitte (24') der Gehäuse (20') der Solarabsorbermodule (2') aufgenommen sind.

20. Solarabsorberanordnung nach Anspruch 18,
**dadurch gekennzeichnet, dass**
die Tragkonstruktion (11) eine Frontfläche (40) mit einer Anordnung von ersten und die ersten Öffnungen (41) umgebenden zweiten Öffnungen (42, 43, 44) aufweist, wobei die Solarabsorbermodule (2) in den ersten Öffnungen (41) aufgenommen sind und die zweiten Öffnungen (42, 43, 44) für einen Austritt der rückströmenden abgekühlten Luft ausgebildet sind.

21. Solarabsorberanordnung nach Anspruch 20,
**dadurch gekennzeichnet, dass**
die zweiten Öffnungen (42, 43, 44) als vertikale und/oder horizontale Schlitze (42, 43) und/oder kreisförmige Öffnungen (44) ausgebildet sind.

## Claims

1. Solar absorber module (2, 2') comprising:
a housing (20) with a longitudinal axis (L)
- with a first tapered housing section (21, 21') with a first free end (22) and a second end (23) with a reduced cross-sectional area compared to the first end (22) and
- with a second housing section (24, 24') adjoining the second end (23) of the first housing section (21, 21') with a substantially constant cross-section over its length,
and a ceramic solar absorber element (30, 30') accommodated in the first end (22) of the first housing section (21, 21')
- with a first surface (31) that can be oriented toward the solar radiation with an axis of symmetry (S) and a second surface (32, 32') lying across from the first surface (31),
- wherein the solar absorber element (30, 30') has a large number of substantially straight channels (33) connecting the first surface (31) to the second surface (32, 32'),
- wherein the first surface (31) of the solar absorber element (30, 30') is configured substantially flat, with the axis of symmetry coinciding with the normal vector of the first surface (31),
**characterized in that**
the solar absorber element (30, 30') is accommodated in the first end (22) of the first housing section (21, 21') such that the axis of symmetry of the first surface (31) is arranged inclined relative to the longitudinal axis (L) of the housing.

2. Solar absorber module (2, 2') according to claim 1,
**characterized in that**
the angle of inclination is 5° - 20°, preferably 12.5°.

3. Solar absorber module (2, 2') according to claim 1 through 2,
**characterized in that**
the solar absorber element (30, 30') is configured as a flat component, in particular disk shaped or cube shaped, with the channels (33) running substantially perpendicular to the planar length.

4. Solar absorber module (2, 2') according to one of claims 1 through 3,
**characterized in that**
the housing (20, 20') is produced from a ceramic material.

5. Solar absorber module (2, 2') according to claim 4
**characterized in that**
the housing (20, 20') is produced from silicon infiltrated silicon carbide (SiSiC) or nitride bound silicon carbide (NSiC) or cordierite.

6. Solar absorber module (2, 2') according to one of claims 1 through 5,
**characterized in that**
the channels (33) have a polygonal cross-section.

7. Solar absorber module (2, 2') according to claim 6,
**characterized in that**
the channels (33) have a hexagonal cross-section.

8. Solar absorber module (2, 2') according to one of claims 1 through 7,
**characterized in that**
the inner wall of the second housing section (24, 24') is provided with an insulating lining (26').

9. Solar absorber module (2, 2') according to claim 8,
**characterized in that**
the insulating lining (26') extends into the first housing section (21), wherein it lies against the wall of the first tapered housing section (21).

10. Solar absorber module (2, 2') according to one of claims 1 through 9,
**characterized in that**
the outer wall of the second housing section (24, 24') is coated with insulation (28).

11. Solar absorber module (2, 2') according to one of claims 1 through 10,
**characterized in that**
the second housing section (24) has on its outer wall at least one spacer projection (27) for centric mounting in a tube of a solar absorber arrangement.

12. Solar absorber module (2) according to one of claims 1 through 11,
**characterized in that**
the housing has, in the first tapered housing section (21), a wall (25) extending over the entire internal cross-section of the first housing section (21), provided with a plurality of openings (26).

13. Solar absorber module (2) according to claim 12,
**characterized in that**
the cross-section of the openings (26) and/or the density of the openings (26) per surface unit of the wall (25) increases from the center of the surface of the wall (25) to its edge.

14. Solar absorber module (2) according to claim 12 or 13,
**characterized in that**
the wall (25) is configured concavely curved as viewed from the free end (22) of the first housing section (21).

15. Solar absorber module (2) according to one of claims 12 through 14,
**characterized in that**
the distribution and/or the cross-section of the openings (26) provided in the wall (25) arranged in the first housing section (21) is dimensioned such that a fluid stream flowing into the solar absorber element (30) over its substantially entire cross-section is guided uniformly into the second housing section (24) with respect to individual surface area units on the absorber element (30).

16. Solar absorber module (2) according to one of claims 12 through 15,
**characterized in that**
the housing (20) is produced in combined hollow casting and solid casting.

17. Method for producing a solar absorber module (2) according to claim 16, wherein the production of the housing (20) is **characterized by** the following process steps:
- creating the housing (20) in combined hollow casting and solid casting, with the region between the first free end (22) of the first housing section (21) and the wall (25) created in solid casting and the region between the wall (25) and the free end of the second section (24) created in hollow casting,
- forming the openings (26) in the unfired wall (25), and
- subsequent high temperature treatment.

18. Solar absorber arrangement with a support structure (11, 11') for a plurality of solar absorber modules (2, 2') according to one of claims 1 through 16.

19. Solar absorber arrangement according to claim 18,
**characterized in that**
the support structure (11') has a number of double walled pipe sockets (60) inset in the supporting structure, in which the respective second housing sections (24') of the housing (20') of the solar absorber module (2') are accommodated.

20. Solar absorber arrangement according to claim 18,
**characterized in that**
the support structure (11) has a front face (40) with an arrangement of first openings (41) and second openings (42, 43, 44) surrounding the first openings (41), wherein the solar absorber modules (2) are accommodated in the first openings (41) and the second openings (42, 43, 44) are configured for discharge of the cooled air flowing back.

21. Solar absorber arrangement according to claim 20,
**characterized in that**
the second openings (42, 43, 44) are configured as vertical and/or horizontal slits (42, 43) and/or circular openings (44).

## Revendications

1. Module d'absorbeur solaire (2, 2') comprenant :
une carcasse (20) présentant un axe longitudinal (L) et comportant :
- un premier segment de carcasse (21, 21') qui se rétrécit et qui présente une première extrémité libre (22) et une seconde extrémité (23) ayant une surface de section réduite par rapport à la première extrémité (22), et
- un second segment de carcasse (24, 24') qui se raccorde à la seconde extrémité (23) du premier segment de carcasse (21, 21') et a une section sensiblement constante sur son extension longitudinale,
et un élément d'absorbeur solaire céramique (30, 30') qui est logé dans la première extrémité (22) du premier segment de carcasse (21, 21') et qui comporte :
- une première surface (31) qui peut être orientée vers le rayonnement solaire et présente un axe de symétrie (S) et une seconde surface (32, 32') à l'opposé de la première surface (31),
- l'élément d'absorbeur solaire (30, 30') présentant une pluralité de canaux (33) s'étendant sensiblement en ligne droite, qui relient la première surface (31) à la seconde surface (32, 32'),
la première surface (31) de l'élément d'absorbeur solaire (30, 30') étant de forme sensiblement plane, l'axe de symétrie coïncidant avec le vecteur normal à la première surface (31),
**caractérisé par le fait que**
l'élément d'absorbeur solaire (30, 30') est logé dans la première extrémité (22) du premier segment de carcasse (21, 21') de telle sorte que l'axe de symétrie de la première surface (31) est disposé incliné par rapport à l'axe longitudinal (L) de la carcasse.

2. Module d'absorbeur solaire (2, 2') selon la revendication 1,
**caractérisé par le fait que**
l'angle d'inclinaison vaut 5° - 20°, de préférence 12,5°.

3. Module d'absorbeur solaire (2, 2') selon l'une des revendications 1 et 2,
**caractérisé par le fait que**
l'élément d'absorbeur solaire (30, 30') est réalisé sous la forme d'un élément plat, en particulier en forme de rondelle ou de carreau, les canaux (33) s'étendant sensiblement perpendiculairement à l'extension plane.

4. Module d'absorbeur solaire (2, 2') selon l'une des revendications 1 à 3,
**caractérisé par le fait que**
la carcasse (20, 20') est fabriquée en une matière céramique.

5. Module d'absorbeur solaire (2, 2') selon la revendication 4,
**caractérisé par le fait que**
la carcasse (20, 20') est fabriquée en carbure de silicium infiltré de silicium (SiSiC) ou en carbure de silicium lié à un nitrure (NSiC) ou en cordiérite.

6. Module d'absorbeur solaire (2, 2') selon l'une des revendications 1 à 5,
**caractérisé par le fait que**
les canaux (33) présentent une section polygonale.

7. Module d'absorbeur solaire (2, 2') selon la revendication 6,
**caractérisé par le fait que**
les canaux (33) présentent une section hexagonale.

8. Module d'absorbeur solaire (2, 2') selon l'une des revendications 1 à 7,
**caractérisé par le fait que**
la paroi interne du second segment de carcasse (24, 24') est munie d'un revêtement isolant (26').

9. Module d'absorbeur solaire (2, 2') selon la revendication 8,
**caractérisé par le fait que**
le revêtement isolant (26') s'étend jusque dans le premier segment de carcasse (21), étant appliqué contre la paroi du premier segment de carcasse (21) qui se rétrécit.

10. Module d'absorbeur solaire (2, 2') selon l'une des revendications 1 à 9,
**caractérisé par le fait que**
la paroi extérieure du second segment de carcasse (24, 24') est entouré d'une isolation (28).

11. Module d'absorbeur solaire (2, 2') selon l'une des revendications 1 à 10,
**caractérisé par le fait que**
le second segment de carcasse (24) présente, sur sa paroi externe, au moins une encoche d'écartement (27) servant à la fixation centrée dans un tube d'un système d'absorbeur solaire.

12. Module d'absorbeur solaire (2) selon l'une des revendications 1 à 11,
**caractérisé par le fait que**
la carcasse présente, dans le premier segment de carcasse (21) qui se rétrécit, une paroi (25) s'étendant sur toute la section intérieure du premier segment de carcasse (21) et munie d'une pluralité d'ouvertures (26).

13. Module d'absorbeur solaire (2) selon la revendication 12,
**caractérisé par le fait que**
la section des ouvertures (26) et/ou la densité des ouvertures (26) par unité de surface de la paroi (25) croît ou croissent du centre de la surface de la paroi (25) au bord de cette dernière.

14. Module d'absorbeur solaire (2) selon l'une des revendications 12 ou 13,
**caractérisé par le fait que**,
vue de l'extrémité libre (22) du premier segment de carcasse (21), la paroi (25) est de forme incurvée avec une forme concave.

15. Module d'absorbeur solaire (2) selon l'une des revendications 12 à 14,
**caractérisé par le fait que**
la répartition et/ou la section des ouvertures (26) ménagées dans la paroi (25) disposée dans le premier segment de carcasse (21) est ou sont de dimension telle qu'un courant de fluide entrant de l'extérieur dans l'élément d'absorbeur solaire (30) sur sensiblement toute la section de cet élément est conduit dans le second segment de carcasse (24) uniformément sur l'élément d'absorbeur (30) relativement aux unités de surface individuelles.

16. Module d'absorbeur solaire (2) selon l'une des revendications 12 à 15,
**caractérisé par le fait que**
la carcasse (20) est fabriquée en jet creux et jet plein combinés.

17. Procédé de fabrication d'un module d'absorbeur solaire (2) selon la revendication 16, dans lequel la fabrication de la carcasse (20) est **caractérisée par** les étapes de procédé suivantes :
- fabrication de la carcasse (20) en jet creux et jet plein combinés, la région comprise entre la première extrémité libre (22) du premier segment de carcasse (21) et la paroi (25) étant fabriquée en jet plein et la région entre la paroi (25) et l'extrémité libre du second segment (24) étant fabriquée en jet creux ;
- formation des ouvertures (26) dans la paroi imbrûlée (25) et
- traitement consécutif à haute température.

18. Système d'absorbeur solaire comprenant une construction porteuse (11, 11') pour une pluralité de modules d'absorbeur solaire (2, 2') selon l'une des revendications 1 à 16.

19. Structure d'absorbeur solaire selon la revendication 18,
**caractérisée par le fait que**
la construction porteuse (11') présente une pluralité de supports tubulaires (60) à double paroi emboîtés dans la construction porteuse, dans lesquels sont logés les seconds segments correspondants (24') de la carcasse (20') des modules d'absorbeur solaire (2').

20. Structure d'absorbeur solaire selon la revendication 18,
**caractérisée par le fait que**
la construction porteuse (11) présente une surface avant (40) munie d'un groupement de premières ouvertures et de secondes ouvertures (42, 43, 44) qui entourent les premières ouvertures (41), les modules d'absorbeur solaire (2) étant logés dans les premières ouvertures (41) et les secondes ouvertures (42, 43, 44) étant destinées à la sortie de l'air refroidi qui reflue.

21. Structure d'absorbeur solaire selon la revendication 20,
**caractérisée par le fait que**
les secondes ouvertures (42, 43, 44) sont réalisées sous la forme de fentes verticales et/ou horizontales (42, 43) et/ou par des ouvertures circulaires (44).
